## Europäisches Patentamt

## European Patent Office

## Office européen des brevets

(19)

(11) Numéro de publication: **0 263 752**
**B1**

(12)

# FASCICULE DE BREVET EUROPEEN

(45) Date de publication du fascicule du brevet:
**10.10.90**

(51) Int. Cl.⁵: **F16D 65/02**

(21) Numéro de dépôt: **87402199.1**

(22) Date de dépôt: **05.10.87**

(54) Dispositif de support pour plusieurs éléments de garniture de friction.

(30) Priorité: **06.10.86 FR 8613915**

(43) Date de publication de la demande:
**13.04.88 Bulletin 88/15**

(45) Mention de la délivrance du brevet:
**10.10.90 Bulletin 90/41**

(84) Etats contractants désignés:
**BE CH DE ES GB IT LI NL SE**

(56) Documents cités:
**EP-A- 0 102 469**
**EP-A- 0 106 782**
**EP-A- 0 128 276**
**DE-U- 8 514 607**
**FR-A- 852 000**
**US-A- 2 904 138**
**US-A- 2 943 713**

(73) Titulaire: **WABCO WESTINGHOUSE EQUIPEMENTS FERROVIAIRES, Société Anonyme dite:, 2 boulevard Westinghouse B.P. 2, F-93270 Sevran(FR)**

(72) Inventeur: **Grenier, Michel, 20, rue Beauséjour Pomponne, F-77400 Lagny/S. Marne(FR)**
Inventeur: **De La Gorce, Jean-Etienne, 72 Quai de la Loire, F-75019 Paris(FR)**
Inventeur: **Cieplinski, Daniel, 20-24 rue de la Procession, F-93250 Villemomble(FR)**

(74) Mandataire: **Hirsch, Marc-Roger, Cabinet Hirsch 34 rue de Bassano, F-75008 Paris(FR)**

ACTORUM AG

## Description

La présente invention se rapporte à un dispositif de support pour plusieurs éléments de garniture de friction destinés à être appliqués simultanément sur une même piste de friction, en particulier sur une face de friction d'un disque de frein par l'effort d'application du frein sur un porte-garnitures. Un tel dispositif est connu par example du documents EP-A 0 106 782.

Les dispositifs de support des garnitures de friction désignés généralement par le terme de "porte-garnitures" jouent un rôle important dans les systèmes de freinage, car ils ont non seulement pour fonction de transmettre aux garnitures de friction, sous forme d'effort normal, l'effort d'application sur les pistes de friction exercé en général par des organes d'expansion à fluide tels que des cylindres de frein à huile ou à air comprimé, mais aussi de transmettre en retour à l'organe de freinage, et de là au châssis du véhicule freiné, les efforts tangentiels de frottement développés sur les garnitures de friction au cours du freinage. Pour les freins à disque, cette double fonction était jusque là remplie sans difficulté par des plaques de forme générale plane sur lesquelles les garnitures de friction était collées ou fixées autrement par adhérence ou "adhérisation" et ces plaques de garniture étaient placées, de façon amovible, dans des logements qui, pour les garnitures les plus sollicitées, notamment en freinage ferroviaire, pouvaient prendre la forme de queue d'aronde résistant à la compression et à l'arrachement frontal mais autorisant un glissement latéral pour procéder à l'échange des garnitures de friction après usure.

Dans le cas des disques de frein les plus sollicités, notamment en aéronautique et en freinage ferroviaire à grande vitesse, une nouvelle exigence est apparue pour les garnitures de friction. Les efforts d'application des freins ne donnent pas des pressions d'application égales et bien réparties sur la zone de la piste de friction en contact avec les garnitures de friction et ces écarts de pression qui étaient auparavant atténués et égalisés après un début d'usure des garnitures de friction portant en biais sur les pistes de friction, conduisent à des échauffements locaux exagérés produisant très rapidement la dégradation complète et définitive des pistes de friction et, le cas échéant, des garnitures de friction. Les équipements de freinage ferroviaire modernes à grande puissance utilisant des disques de frein en acier à structure austénitique ou à base de fibres de carbone et des garnitures de friction en matériau fritté résistant aux températures élevées, sont soumis, en cas de mauvaise répartition de la pression des garnitures de friction sur la piste de friction. à des chocs thermiques qui détruisent en quelques secondes le disque de friction lui-meme, par fissuration et éclatement. Les porte-garnitures pour les disques de frein à grande puissance doivent être conçus de manière à assurer des pressions égales des garnitures de friction sur les pistes de friction des disques et une répartition bien dosée des blocs de freinage par rapport à la zone de contact des pistes de friction.

L'un des buts de la présente invention est précisément de réaliser un dispositif de support de garnitures de friction qui garantisse que, dans tous les cas, et sans avoir à attendre une usure d'égalisation de ces garnitures, la pression d'application des garnitures sur les pistes de friction est instantanément la même pour toutes les garnitures quelle que soit leur position par rapport au corps du support, et que cette égalité se maintienne dans le temps.

A cet effet, selon la présente invention, chaque élément de friction est porté par l'extrémité libre d'un piston d'équilibrage mobile dans un alésage de guidage et d'étanchéité ménagé dans un corps du porte-garnitures et dont l'autre extrémité débouche sur une chambre de confinement fermée à l'intérieur du porte-garnitures et remplie d'un fluide hydrostatique ou quasi-hydrostatique apte à transmettre sa pression interne à tous les pistons d'équilibrage des divers éléments de garnitures de friction, de manière à répartir ledit effort d'application du frein de façon sensiblement proportionnelle à la section de chacun des pistons d'équilibrage.

La chambre de confinement peut comporter des moyens de scellement tels qu'au moins une membrane étanche à toute fuite, y compris au niveau du passage de chaque piston d'équilibrage. Cet effet d'étanchéité peut etre réalisé en utilisant, comme fluide hydrostatique, un élastomère visqueux ou très élastique, susceptible de se comporter comme un liquide hydrostatique mais qui ne peut s'échapper dans les minces espaces annulaires de débattement formés par le jeu entre les pistons et leurs alésages.

Selon un autre mode de réalisation de l'invention, l'extrémité du piston d'équilibrage qui débouche dans la chambre de confinement se termine par une tête élargie retenue dans cette chambre par un manchon de guidage du piston en translation, fixé de façon étanche par sa périphérie dans un alésage ménagé entre la chambre hydrostatique et la face du porte-garnitures située du côté des éléments de friction et la chambre de confinement est remplie par l'intermédiaire de passages appropriés obturés par des bouchons d'un corps élastomère ou quasi-liquide et ne risquant pas de fuir à travers le jeu annulaire subsistant entre le manchon de guidage et le corps du piston mais apte à transmettre au piston d'équilibrage, pratiquement sans écrasement interne, la pression hydrostatique régnant à l'intérieur de la chambre de confinement du fait dudit effort d'application du frein.

Selon le mode de réalisation le plus simple du support de garniture de friction, la chambre de confinement est remplie d'un bloc d'élastomère quasi-solide sur lequel porte directement ou par l'intermédiaire d'un piston de transmission l'autre extrémité des pistons d'équilibrage. La chambre de confinement est constituée par une rainure ménagée, par exemple par fraisage, dans une plaque épaisse et reliant tous les emplacements de la plaque situés en face des pistons d'équili brage, ladite rainure étant fermée par une plaque d'obturation fixée sur la plaque épaisse. La rainure est ménagée dans le corps de porte-garnitures et est obturée par une plaque d'obturation traversée par les pistons d'équilibrage et équipée de moyens de retenue de ces pistons. Le moyen de retenue de chaque piston d'équilibrage est constitué par un épaulement de l'alésage de traversée de la plaque d'obturation par le piston d'équilibration et par au moins une rondelle de friction en butée sur la plaque d'obturation et serrée sur le piston d'équilibrage.

Selon un autre aspect de l'invention, chaque élément de garnitures de friction comporte une embase rigide sur une face de laquelle est montée la partie de garniture de friction et qui est susceptible de venir en appui du côté de son autre face sur une extrémité d'appui conjuguée du piston d'équilibrage par une liaison à rotule autorisant un mouvement de pivotement entre l'embase et le piston d'équilibre. L'embase rigide est, de préférence, reliée avec possibilité de débattement, à l'extrémité sphérique du piston d'équilibrage, par un organe de liaison en traction. Cet organe de liaison en traction est constitué avantageusement par un téton solidaire de l'embase et engagé dans un trou borgne ménagé sensiblement au centre de l'extrémité sphérique du piston d'équilibrage et relié aux parois latérales intérieures dudit trou borgne par un disque annulaire interposé entre une rainure annulaire extérieure ménagée sur la paroi latérale du trou borgne et une rainure annulaire intérieure ménagée à la périphérie du téton.

Selon un autre mode de réalisation intéressant de l'invention, les embases rigides des éléments de garniture de friction sont chacune engagées élastiquement par une rainure périphérique dans une ouverture d'une plaque mince qui est fixée, de façon amovible, en plusieurs zones sur l'une des faces de forme générale plane du porte garnitures et qui est apte à supporter les efforts tangentiels transmis par les éléments de friction et à les transmettre par lesdites zones de fixation au porte-garnitures. La plaque mince est maintenue à distance de la face du porte-garnitures pour permettre le libre pivotement des embases, à l'aide d'un manchon présentant une rainure périphérique dans laquelle est engagé le bord périphérique intérieur d'un trou correspondant de la plaque et ledit manchon portant la plaque maintenue à distance de la face du porte-garnitures est plaqué dans un trou ménagé sur la face du porte-garnitures par une vis traversant un alésage central du manchon et vissée de façon amovible dans un alésage fileté du porte-garnitures. Chaque ouverture de la plaque mince recevant une embase est constituée d'un alésage qui présente un diamètre inférieur à celui de l'embase mais supérieur à celui du fond de la rainure périphérique de l'embase et autour duquel sont réparties plusieurs fentes radiales.

Selon un mode de réalisation de l'invention qui s'est révélé apte à diminuer le bruit du frein à disque en service. les parties de liaison à rotule des embases rigides sont reliées transversalement entre elles par une plaque mince soudée et susceptible de transmettre entre les embases les efforts tangentiels aux garnitures de friction mais non les efforts normaux et qui laisse les embases libres de se déplacer axialement sur une faible course et de pivoter d'un angle limité, indépendamment les unes des autres.

Au moins un trou d'indexation est prévu dans la plaque mince pour recevoir l'extrémité d'une tige de positionnement dont l'autre extrémité est engagée dans un alésage ou une rainure correspondant de l'embase.

De manière à bien répartir l'effort d'application de chaque élément de garniture de friction sur la piste de friction, au moins l'un des éléments de garniture de friction comporte plusieurs blocs en matériau de friction fixés sur l'embase. L'embase présente avantageusement une forme générale de triangle isocèle centré sur l'axe du piston d'équilibrage et l'élément de garniture de friction comporte trois blocs en matériau de friction répartis régulièrement autour de l'axe du piston d'équilibrage dans chacun des angles du triangle.

Lorsque le dispositif de support selon l'invention est destiné à être appliqué au freinage d'un disque de frein, les différentes embases et les blocs de matériau de friction fixés sur ces embases sont répartis pour venir en contact avec la surface de friction du disque selon des surfaces de contact qui sont disposées géométriquement par rapport à la surface de friction de ce disque de manière à obtenir, en service, un échauffement sensiblement identique en tous les points de la surface de friction du disque, à l'exception des bords intérieur et extérieur de cette surface de friction.

D'autres buts, avantages et caractéristiques apparaîtront à la lecture de la description d'un mode de réalisation de l'invention, faite à titre non limitatif et en regard du dessin annexé où:

- la figure 1 est une vue en coupe partielle, selon la ligne I-I de la figure 3, d'un dispositif selon l'invention de support d'éléments de friction appliqués sur la piste de friction d'un disque de frein;
- la figure 2 est une vue en plan à plus petite échelle, du dispositif représenté partiellement en coupe à la figure 1; et
- la figure 3 est une vue en plan à la même échelle, de la plaque de liaison tangentielle des éléments de friction qui est montée sur le dispositif représenté sur les figures 1 et 2;
- la figure 4 est une vue en coupe et par moitié de deux modes de réalisation simplifiés du dispositif de support d'éléments de friction selon l'invention;
- la figure 5 est une vue en plan correspondant à la figure 4.

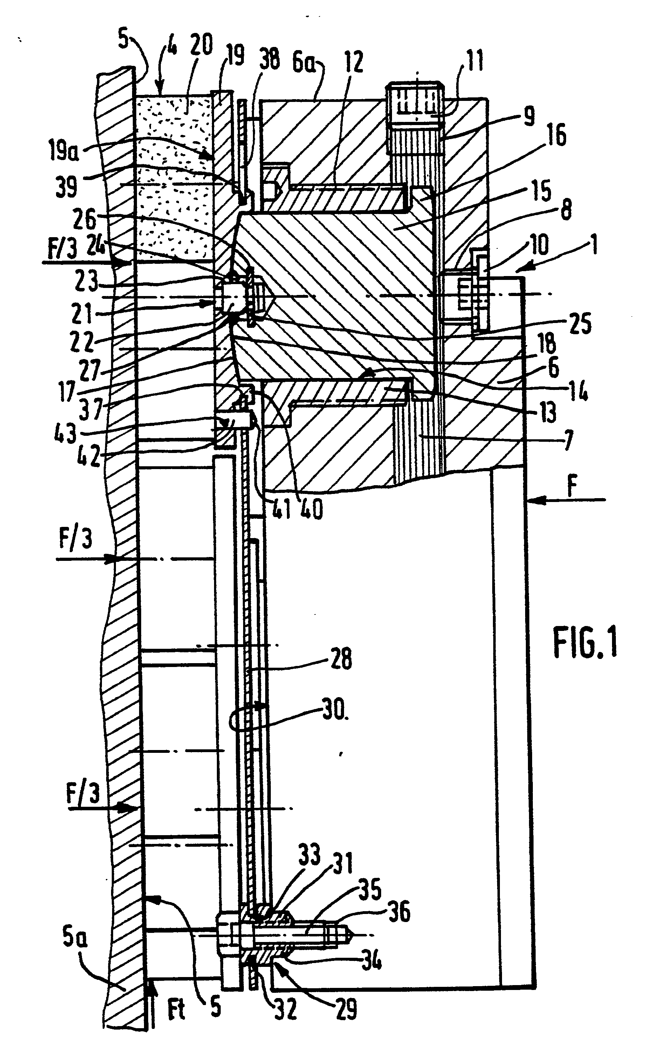

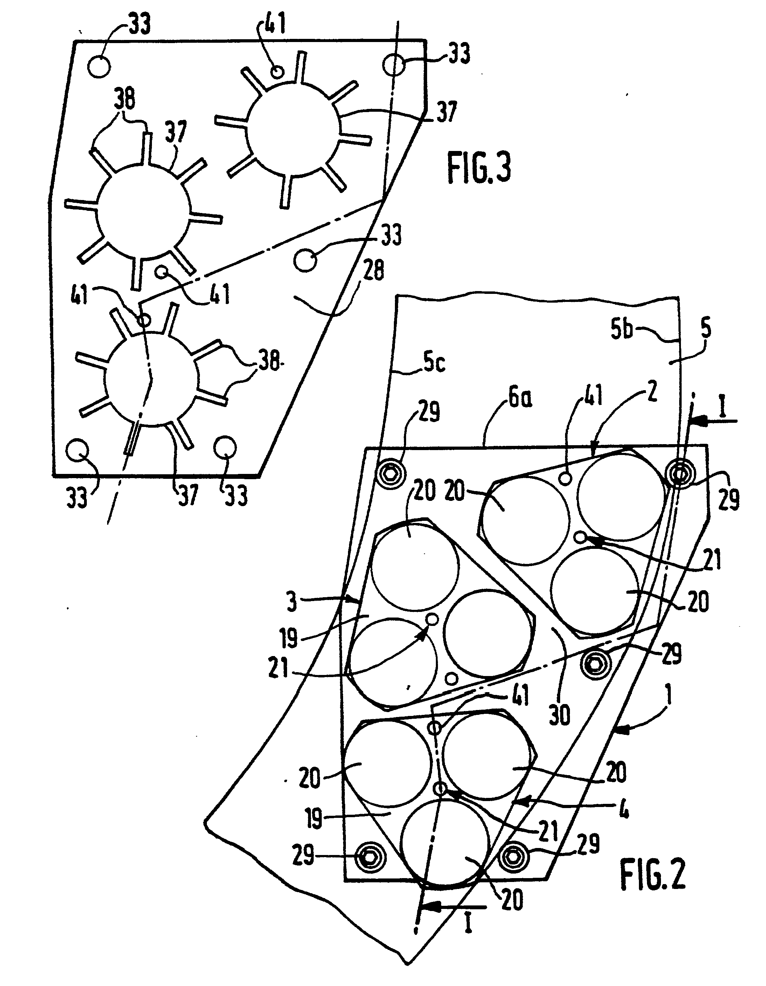

On voit, sur la figure 2, que le dispositif de support 1 pour plusieurs éléments de garnitures de friction 2, 3, 4 forme, selon le mode de réalisation décrit, un demi porte-garnitures d'un étrier de frein non représenté, dont les deux pinces viennent serrer la piste de friction 5 d'un disque de frein 5a, représenté de façon fragmentaire à la figure 1.

Sur la coupe de la figure 1, le corps 6 du porte-garnitures, c'est-à-dire du dispositif 1, est formé d'une plaque monobloc épaisse venue de fonderie et dans laquelle est ménagée une chambre interne 7 également en forme de plaque et reliée à l'extérieur par des ouvertures de remplissage 8 et 9 fermées, de façon étanche, par des bouchons d'obturation 10 et 11. La chambre 7 communique avec l'extérieur par des alésages filetés, ménagés chacun en face d'un élément de garnitures 2, 3 ou 4, seul l'alésage fileté 12 ménagé en face de l'élément 4 étant représenté à la figure 1. Les alésages filetés 12 sont, par exemple, usinés à partir de trous de dessablage du noyau de fonderie permettant de réaliser la chambre 7 et un manchon de guidage, tel que le manchon 13 à la figure 1, est vissé de façon étanche, par sa périphérie extérieure, dans chaque alésage fileté.

Un alésage interne (14 sur la figure 1) est ménagé à l'intérieur de chaque manchon et reçoit un piston d'équilibrage 15, de forme générale cylindrique et qui se termine à l'intérieur de la chambre 7 par une tête élargie 16 qui est, en quelque sorte emprisonnée par le manchon 13 au moment du vissage étanche de celui-ci dans son alésage fileté 12. Du côté opposé à la chambre interne 7, le piston d'équilibrage 15 se termine par une tête sphérique convexe 17 sur laquelle vient s'appuyer la portée sphérique concave 18 d'une embase rigide 19 portant des blocs de friction 20. On voit sur la figure 2 que chaque élément de friction 2, 3 ou 4 comporte, sur une embase 19 de forme générale plane à profil extérieur en triangle isocèle à sommets tronqués, trois blocs 20 de garnitures de friction en matériau fritté à haut coefficient de frottement (0,3 à 0,4) sur des disques en acier à structure austénitique. Les blocs de friction 20 sont collés ou rendus adhérents autrement (par exemple par cuisson ou soudure) sur la surface extérieure 19a parfaitement plane de l'embase 19.

Au centre de chaque embase 19 est prévue une liaison élastique de traction 21 avec le piston 15. Cette liaison de traction consiste, dans le mode de réalisation représenté, en un téton ou tige 22 rendu solidaire de l'embase 19 par exemple à l'aide d'un alésage 23 ménagé au centre de l'embase, et engagé dans un trou borgne 24 disposé au centre de l'extrémité sphérique 17 du piston 15. Le téton 22 est relié aux parois latérales intérieures du trou borgne 24 par un disque annulaire élastique 25 interposé à force entre une rainure annulaire extérieure 26 ménagée sur la paroi latérale du trou borgne 24 et une rainure annulaire intérieure 27 ménagée à la périphérie du téton 22.

Une plaque mince 28 est fixée en plusieurs points ou zones 29 (voir la figure 2) de la face 30 du corps 6 qui regarde les éléments de friction, à faible distance de cette face 30. Pour cela, un manchon de faible diamètre 31 présente une rainure périphérique intérieure 32 dans laquelle est engagé le bord intérieur d'un trou 33 de la plaque 28 et ce manchon 31 est plaqué dans un lamage ou trou 34 ménagé sur la face 30 du corps 6, par une vis de serrage 35 traversant un alésage central du manchon 31 et fixée dans un alésage fileté 36 du corps 6.

La plaque mince 28 qui présente du fait de sa minceur une grande élasticité, est représentée en plan à la figure 3 où l'on voit que la plaque 28 présente, en correspondance à chaque piston 15 et à chaque embase 19, une ouverture circulaire ou alésage cylindrique 37 autour duquel est ménagée radialement une série de fentes 38 régulièrement réparties sur la circonférence de l'ouverture. Ces fentes 38 ont pour fonction de donner de l'élasticité radiale à chacune des ouvertures 37 et de permettre d'y introduire, élastiquement, la rainure intérieure 39 ménagée à la périphérie de l'embase 19 autour de la couronne 40 de cette embase entourant l'extrémité sphérique 17 du piston 15. Afin de permettre de repérer chaque embase 19 en rotation et d'interdire à ces embases de tourner à l'intérieur de l'ouverture 37, un trou d'indexation 41 est prévu entre deux fentes radiales 38 pour recevoir l'extrémité d'une tige de positionnement 42 dont l'autre extrémité est engagée dans un alésage correspondant 43 de l'embase 19.

La chambre interne 7 constitue une chambre de confinement pour un fluide à propriétés hydrostatiques. Selon un premier mode de réalisation, la chambre de confinement 7 est remplie d'un liquide tel que de l'huile en éliminant soigneusement toute présence d'air et l'étanchéité permanente entre la paroi extérieure des pistons 15 et la paroi intérieure des manchons 13 est assurée par des membranes élastiques annulaires, constituées chacune de préférence par un soufflet métallique interposé entre le manchon 13 et l'extrémité du piston 15. Selon un autre mode de réalisation, les parois intérieures de la chambre de confinement 7 sont tapissées d'une membrane souple, par exemple en élastomère relativement épais, refermée sur elle meme et remplie sans aucune bulle d'air, d'un liquide fluide tel que de l'huile. Selon le mode de réalisation représenté, on introduit dans la chambre 7 via les ouvertures 8 et 9 utilisées en entrée et en sortie, un élastomère visqueux suffisamment fluide pour transmettre hydrostatiquement la pression à laquelle il est soumis du fait de l'effort d'application du frein et suffisamment visqueux pour ne pas s'échapper à travers le jeu annulaire existant entre le piston 15 et le manchon 13. La chambre de confinement 7 est obturée, après son remplissage en fluide hydrostatique visqueux, par la remise en place des bouchons 10 et 11 et peut conserver pendant une longue durée son élastomère visqueux. En variante, l'élastomère peut être introduit à l'état liquide dans la chambre 7 où il se solidifie sans perdre son élasticité et sa capacité de transmission hydrostatique. Dans ce cas, les têtes élargies 16 doivent être placées avant la "prise" de l'élastomère dans la position représentée sur la figure 1 et permettant au piston 15 de se déplacer d'une faible course respectivement en expansion pour repousser les blocs de matériau de friction 20 au contact de la piste de friction 5 et en compression pour forcer d'autres pistons 15 à presser les blocs de matériau de friction 20 sur la piste de friction 5.

On va maintenant expliquer le fonctionnement du dispositif de support selon l'invention. Lorsque la pince non représentée de l'étrier d'un disque de frein vient plaquer les deux demi porte-garnitures 6 (un seul est représenté sur les figures 1 et 2 et les deux demi porte-garnitures sont, de préférence, montés quasi-jointifs par la face plane 6a du corps de porte-garnitures) sur la piste de friction 5 du disque de frein 5a, le dispositif de support 1 est alors soumis sensiblement au centre du porte-garnitures 6 à l'effort d'application du frein F. La surface de la piste de friction 5 réagit à cette force F, sur chacun des trois éléments de garnitures de friction par une force de réaction en principe égale à -F/3 et appliquée sensiblement au centre de chacun des trois éléments de garnitures de friction 2, 3 et 4.

La distribution régulière de l'effort d'application F sur chacun des éléments de friction est théorique et n'est obtenue que grâce au dispositif selon l'invention. En effet, si l'effort d'application F des garnitures de friction sur la piste de friction 5 se porte initialement sur le seul élément de garnitures de friction 4 représenté en coupe à la figure 1, la réaction de cet effort d'application F sur le piston 15 de l'élément 4 provoque la mise sous pression de la chambre de confinement 7 qui réagit hydrostatiquement sur les pistons 15 des autres éléments 2 et 3 pour les repousser en direction de la piste de friction 5 avec une force d'application F/3.

Du fait que la surface sphérique concave 18 de l'embase 19 peut osciller ou "rotuler" sur la surface sphérique convexe 17 du piston 15, les poussées des blocs 20 des garnitures de friction sur la piste de friction 5 s'égalisent pour chaque élément de friction 2, 3 ou 4.

La force d'application F perpendiculaire à la surface de la piste de friction 5 du disque de frein, engendre une force de frottement tangentielle Ft qui risquerait d'arracher les embases 19 hors des embouts sphériques 17 des pistons 15 s'il n'y avait la plaque mince 28 qui bloque tangentiellement les embases 19 tout en leur permettant d'osciller ou de reculer légèrement et qui assure ainsi la transmission de ces forces tangentielles de freinage captées par les blocs de freinage 20 au porte-garnitures 6, même en cas d'échauffement violent de ces blocs 20 et des embases 19 qui les supportent.

On remarque, sur la figure 2, que les surfaces de friction des blocs 20 en matériau de friction sont plus importantes vers la périphérie de cette surface 5 qu'en son centre et sont ainsi réparties sur la piste de freinage 5 du disque 5a, de manière telle que la quantité de chaleur dégagée (au cours du freinage) par unité de surface de la piste de friction 5 soit sensiblement constante sur toute la surface de friction 5, à l'exception de ses zones périphériques extérieures 5b et 5c. Les chocs et distorsions thermiques sur cette piste de friction 5 sont ainsi supprimés au minimum au cours du freinage et les risques de fissuration et de rupture du disque 5a pendant les freinages à grande puissance sont réduits alors que l'usure des pistes de friction est sensiblement égalisée en tous les points à l'exception de leurs zones périphériques.

Les pistons d'équilibrage 15 peuvent présenter des sections différentes, la surface de friction des blocs 20 de matériau de friction étant alors, de préférence, proportionnelle à la surface de la section transversale de ces pistons, de manière à maintenir pour le matériau de friction des pressions de contact sensiblement identiques partout. Les éléments de friction portant le plus petit nombre de blocs 20 de matériau de friction sont, par exemple, situés en face des bords de la piste de friction 5. Les embases 19 peuvent présenter, en plan, un contour régulier autre que celui d'un triangle, par exemple un carré, un octogone ou un hexagone.

Selon une variante de réalisation, la plaque mince 28 est supprimée et les blocs 20 en matériau de friction sont montés individuellement et non plus par groupe de 3 sur un piston d'équilibrage hydrostatique individuel.

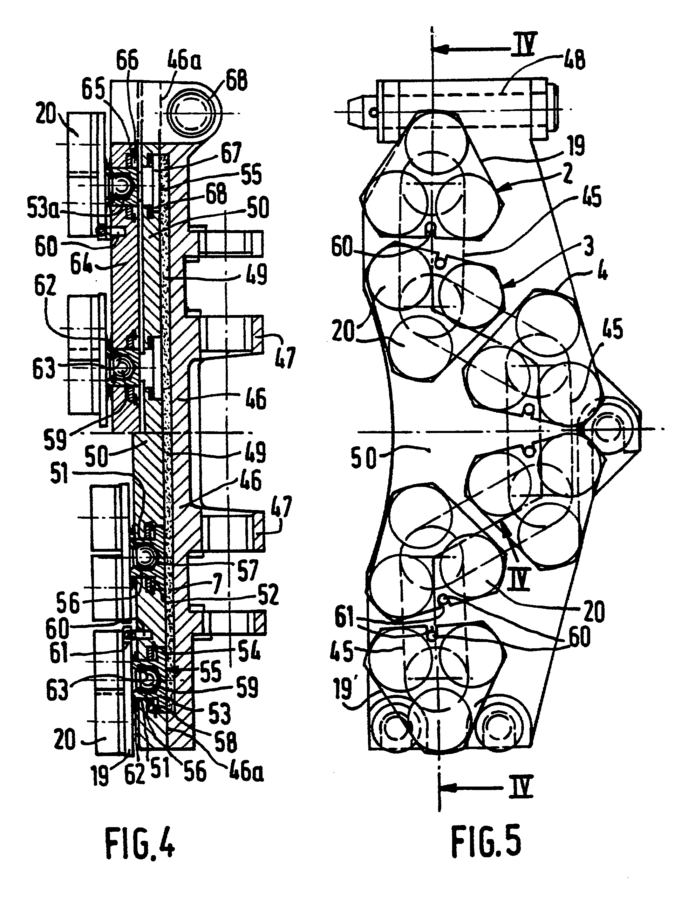

Selon le mode de réalisation préféré représenté sur les figures 4 et 5, la chambre de confinement 7 est constituée par une rainure continue 45 (voir la figure 5) ménagée en zig-zag par fraisage dans le corps de porte-garnitures 46 venu de fonderie avec ses articulations 47 et 48 respectivement de pince de frein et de biellette de suspension.

La rainure fraisée 45 est remplie d'une couche relativement mince d'élastomère 49 formant une languette et est obturée par une plaque d'obturation 50 serrée par des vis, non représentées, sur la face frontale plane 46a du corps de porte-garnitures 46. Selon le mode de réalisation le plus compact représenté au bas de la figure 4, la plaque de fermeture 50 est traversée par plusieurs alésages 51 autour desquels sont ménagés, du côté de l'élastomère, des chambrages ou lamages 52 dans lesquels viennent se loger des pistons poussoirs à gradins 53.

Le gradin de grand diamètre 54 du piston poussoir 53 est en appui direct par sa face frontale plane 55 sur le bloc d'élastomère 49 pour constituer un piston d'équilibrage. Le gradin de plus faible diamètre 56 du piston poussoir 53 traverse l'alésage 51 pour déboucher à l'extérieur de la plaque de fermeture 50 et présente à l'intérieur un logement de rotule en creux 57. Au fond du chambrage 52, est logée une rondelle de friction 58 qui vient serrer la surface extérieure du gradin de plus faible diamètre pour en amortir par friction les déplacements. A l'intérieur du logement de rotule en creux 57, vient se placer la tête ou sphère de rotule 59 de l'embase rigide triangulaire 19 portant trois blocs de friction 20. Cette embase rigide 19 est empêchée de tourner par un téton 60 fiché dans la plaque de fermeture 50 et qui vient se loger dans une rainure 61 ménagée sur le côté de l'embase 19. Un empilement de rondelles Belleville 62 est disposé entre le fond de l'embase 19 autour du pied de la sphère 59 et la plaque de fermeture 50, afin de limiter les risques de basculement de l'embase 19 lorsque ces blocs de friction 20 ne sont pas appliqués sur leur piste de friction.

Le mode de réalisation représenté en bas de la figure 4 est très compact et très simple à réaliser car il ne nécessite, en supplément du corps de garniture 46, que le fraisage de la rainure 45 et la pose de la plaque de fermeture 50 venant emprisonner les gradins de grand diamètre 54 des pistons poussoirs 53. Après usure des blocs de friction 20 fixés par adhérence sur l'embase 19, celle-ci peut être aisément retirée après l'enlèvement d'un clip 63 de retenue de la sphère de rotule 59 dans son logement creux 57.

Lorsque les blocs de friction 20 sont appliqués sur la piste de friction 5, les pistons poussoirs 53 de chaque embase 19 viennent presser par leur gradin de grand diamètre 54 la languette d'élastomère 49 avec une pression modérée de l'ordre de cinquante bars et cette languette d'élastomère 49 se comporte alors, pour de faibles courses de déplacement, comme une chambre à fluide hydrostatique qui égalise les pressions d'applications agissant sur les différents pistons poussoirs 53.

Le mode de réalisation représenté à la partie supérieure de la figure 4 comporte les mêmes éléments qu'à la partie inférieure, à la différence que pour obtenir un meilleur guidage du piston poussoir 53, celui-ci est divisé en deux parties: d'une part, une partie extérieure 53a à surface cylindrique, logée dans une plaque extérieure de fermeture 64 qu'elle traverse par un alésage, et retenue par une rondelle de friction 65 analogue à la rondelle 58 (et logée dans un lamage 66) et d'autre part, un pion intérieur 67. Le pion 67 sort par un gradin de petit diamètre de la plaque 50 de fermeture de la rainure 45 pour venir en appui sur la partie extérieure 53a du piston poussoir 53. Du côté opposé, le pion 67 présente un gradin de grand diamètre 68 qui est en appui sur la languette d'élastomère 49.

La rainure 45 est réalisée par une fraise en bout et vient passer en zig-zag en face du centre de toutes les embases rigides triangulaires 19. L'emplacement des diverses embases et leur orientation par le pion 60 sont déterminés par le calcul et par l'expérimentation pour égaliser le mieux possible les échauffements qui se développent sur la surface de la piste de friction 5 au cours du freinage. Le mode de réalisation représenté sur le haut de la figure 4 assure un découplage entre la répartition hydrostatique des efforts d'application des garnitures de friction et la transmission de ces efforts d'application, ce qui est favorable à la tenue en service du dispositif de support des éléments de garniture de friction mais par contre augmente l'encombrement en épaisseur et le coût de réalisation.

Selon un mode de réalisation appliquant la plaque mince 28, représentée à la figure, aux variantes de réalisation représentées sur les figures 4 et 5, les parties 59 de liaison à rotule des embases rigides 19 sont reliées transversalement entre elles par une plaque mince qui peut s'apparenter dans sa fonction à la plaque mince 28 représentée à la figure 1. Cette liaison transversale s'effectue par exemple en prévoyant une tôle métallique mince et souple, par exemple en acier soudable dont le profil extérieur correspond sensiblement à celui de la plaque d'obturation 50 et dans laquelle sont ménagées des ouvertures, de préférence circulaires, correspondant à chacune des embases 19. A l'intérieur de chacune de ces ouvertures, vient s'engager une collerette solidaire soit de la liaison entre la tête de rotule 59 et l'embase 19, soit directement de l'embase 19. La collerette est ensuite soudée à la plaque mince, ce qui relie celle-ci à l'embase de façon rigide pour transmettre les efforts tangentiels aux garnitures de friction et de façon souple dans les autres directions, aussi longtemps qu'il ne s'agit que de déplacements de faible amplitude. Chaque embase 19 est ainsi libre de se déplacer axialement d'une faible course et de pivoter d'un angle limité par rapport aux autres embases. Cette liaison entre les embases, rigide dans le sens axial et relativement souple dans les autres directions s'est révélée apte à réduire le bruit de sifflement émis par le frein à disque au cours du freinage.

**Revendications**

1.- Dispositif de support (1) pour plusieurs éléments de garnitures de friction (2, 3, 4) destinés à être appliqués simultanément sur une même piste de friction (5), en particulier, sur une face de friction d'un disque de frein (5a), par l'effort d'application du frein sur un porte-garnitures, caractérisé en ce que chaque élément de friction (2, 3, 4) est porté par l'extrémité libre (17, 57) d'un piston d'équilibrage (15, 53) mobile dans un alésage de guidage et d'étanchéité (14, 51) ménagé dans un corps (6, 46) du porte-garnitures et dont l'autre extrémité (16, 55) débouche sur une chambre de confinement (7) fermée à l'intérieur du porte-garnitures et remplie d'un fluide hydrostatique ou quasi-hydrostatique (49) apte à transmettre sa pression interne à tous les pistons d'équilibrage (15, 53) des divers éléments (2, 3, 4) de garniture de friction.

2.- Dispositif selon la revendication 1, caractérisé en ce que la chambre de confinement (7) est remplie d'un bloc d'élastomère quasi-solide (49) sur lequel porte directement ou par l'intermédiaire d'un piston de transmission (53a) l'autre extrémité (55) des pistons d'équilibrage (53).

3.- Dispositif selon la revendication 2, caractérisé en ce que la chambre de confinement (7) est constituée par une rainure (45) ménagée, par exemple par fraisage, dans une plaque ou corps (46) et reliant tous les emplacements de la plaque situés en face des pistons d'équilibrage (53), ladite rainure (45) étant fermée par une plaque d'obturation (50) fixée sur ladite plaque ou corps (46).

4.- Dispositif selon la revendication 3, caractérisé en ce que la rainure (45) est ménagée dans le corps (46) de porte-garnitures et est obturée par une plaque d'obturation (50) traversée par les pistons d'équilibrage (53) et équipée de moyens de retenue (58, 52) des pistons d'équili brage (53).

5.- Dispositif selon la revendication 4, caractérisé en ce le moyen de retenue de chaque piston d équilibrage (53) est constitué par un épaulement (52) de l'alésage (51) de traversée de la plaque d'obturation (50) par le piston d'équilibrage (53) et par au moins une rondelle de friction (58) en butée sur la plaque d'obturation (50) et serrée sur le piston d'équilibrage (53).

6.- Dispositif selon l'une des revendications 1 à 5, caractérisé en ce que chaque élément de garnitures de friction (2, 3, 4) comporte une embase rigide (19) sur une face (19a) de laquelle est montée la garniture de friction et qui est susceptible de venir en appui au côté de son autre face sur une extrémité d'appui conjuguée (17, 57) du piston d'équilibrage (15, 53) par une liaison à rotule (18, 17; 59, 57) autorisant un mouvement de pivotement entre l'embase (19) et le piston d'équilibrage (15, 53, 53a).

7.- Dispositif selon la revendication 6, caractérisé en ce que l'embase rigide (19) est reliée, avec possibilité de débattement, à l'extrémité sphérique (17, 57) du piston d'équilibrage (15, 53), par un organe de liaison en traction (21, 63).

8.- Dispositif selon la revendication 7, caractérisé en ce que l'organe de liaison en traction (21) est constitué par un téton (22) solidaire de l'embase (19) et engagé dans un trou borgne (24) ménagé sensiblement au centre de l'extrémité sphérique (17) du piston d'équilibrage (15) et relié aux parois latérales intérieures dudit trou borgne par un disque annulaire élastique (25) interposé entre une rainure annulaire extérieure (26) ménagée sur la paroi latérale du trou borgne (24) et une rainure annulaire intérieure (27) ménagée à la périphérie du téton (22).

9.- Dispositif selon l'une des revendications 6 à 8, caractérisé en ce que les embases rigides (19) des éléments de garnitures de friction (2, 3, 4) sont chacune engagées élastiquement par une rainure périphérique (39) dans une ouverture (37) d'une plaque mince (28) qui est fixée de façon amovible en plusieurs zones (29) sur l'une des faces (30) de forme générale plane du porte-garnitures (6) et qui est apte à supporter les efforts tangentiels transmis par les éléments de friction (2, 3, 4) et à les transmettre par lesdites zones de fixation au porte-garnitures (1).

10.- Dispositif selon la revendication 9, caractérisé en ce que la plaque mince (28) est maintenue à distance de la face (30) du porte-garnitures (6) pour permettre le libre pivotement des embases (19), à l'aide d'un manchon (31) présentant une rainure périphérique (32) dans laquelle est engagé le bord intérieur d'un trou (33) correspondant de la plaque (28) et en ce que ledit manchon (31) est plaqué dans un trou (34) ménagé sur la face (30) du porte-garnitures par une vis (35) traversant un alésage central du manchon (31) et vissée de façon amovible dans un alésage fileté (36) du porte-garnitures (6).

11.- Dispositif selon l'une des revendications 9 ou 10, caractérisé en ce que chaque ouverture (37) de la plaque mince (28) recevant une embase (19) est constituée d'un alésage qui présente un diamètre inférieur à celui de l'embase (19) mais supérieur à celui du fond de la rainure périphérique (39) de l'embase (19) et autour duquel sont répartis plusieurs fentes radiales (38).

12 - Dispositif selon l'une des revendications 6 à 8, caractérisé en ce que les parties (59) de la liaison à rotule des embases rigides (19) sont reliées transversalement entre elles par une plaque mince et souple (28) susceptible de transmettre entre les embases (19) les efforts tangentiels aux garnitures de friction (20) mais non les efforts normaux et qui laisse les embases (19) libres de se déplacer axialement sur une faible course et de pivoter d'un angle limité, indépendamment les unes des autres.

13.- Dispositif selon la revendication 11 ou 12, caractérisé en ce qu'au moins un trou d'indexation (41) est prévu dans la plaque mince (28) pour recevoir l'extrémité d'une tige de positionnement (42) dont l'autre extrémité est engagée dans un alésage (43) ou une rainure (61) correspondant de l'embase (19).

14.- Dispositif selon l'une des revendications 6 à 13, caractérisé en ce que l'embase (19) présente une forme générale de triangle isocèle centré sur l'axe du piston d'équilibrage (15) et en ce que l'élément de garniture de friction (2, 3, 4) comporte trois blocs (20) en matériau de friction répartis régulièrement autour de l'axe du piston d'équilibrage dans chacun des angles du triangle.

15.- Dispositif selon la revendication 13 ou 14 et destiné à être appliqué à un disque de frein, caractérisé en ce que les différentes embases (19) et les blocs de matériau de friction (20) fixés sur ces embases sont répartis pour venir en contact avec la surface de friction (5) du disque selon des surfaces de contact qui sont disposées géométriquement par rapport à la surface de friction (5) de ce disque de manière à obtenir en service un échauffement sensiblement identique en tous les points de la surface de friction (5) du disque, à l'exception des bords intérieur et extérieur de cette surface de friction.

16.- Dispositif selon l'une des revendications 1 à 15, caractérisé en ce que l'extrémité du piston d'équilibrage (15) qui débouche dans la chambre de confinement (7) se termine par une tête élargie (16) retenue dans cette chambre par un manchon (13) de guidage en translation du piston, fixé de façon étanche par sa périphérie dans un alésage (12) ménagé entre la chambre de confinement (7) et la face (30) du porte-garnitures (6) située du côté des éléments de fiction (2, 3, 4).

17.- Dispositif selon la revendication 1, caractérisé en ce que la chambre de confinement (7) comporte des moyens de scellement au niveau du passage (14) de chaque piston d'équilibrage (15).

## Claims

1. Device (1) for supporting a plurality of friction pad elements (2, 3, 4) adapted to be applied simultaneously onto one common friction path (5) and more particularly onto one friction side or face of a brake disc (5a) by the effect of the force of application of the brake onto a brake pads carrier, characterized in that each friction element (2, 3, 4) is carried by the free end (17, 57) of a balancing piston (15, 53) which is movably mounted into a guiding and sealing bore (14, 53) provided in a body (6, 46) of the brake pads carrier, the other end (16, 46) of which opens into a containment chamber (7) that is closed within the brake pads carrier and filled with a hydrostatic or substantially hydrostatic fluid (49) adapted to transmit its internal pressure to all the balancing pistons (15, 53) of the various friction pad elements (2, 3, 4).

2. Device according to claim 1, characterized in that the containment chamber (7) is filled with a substantially solid elastomer block (49) on which rests directly or through the intermediary of a transmission piston (53a) the other end of said balancing piston (53).

3. Device according to claim 2, characterized in that the containment chamber (7) is constituted by a groove (45) provided, e.g. by milling, in a plate or body (46), said groove interconnecting all the locations of said plate that are facing the balancing pistons (53), and said groove being closed by a sealing plate (50) secured onto said plate or body (46).

4. Device according to claim 3, characterized in that said groove (45) is provided in the body (46) of said brake pads carrier and is closed by a sealing plate (50) which is crossed through by the balancing

pistons (53) and provided with means (58, 523) for maintaining the balancing pistons (53).

5. Device according to claim 4, characterized in that the retaining means of each balancing piston (53) is constituted by a shoulder (52) of the through-bore (51) provided in said sealing plate (50) through which extends the balancing piston (53), and by at least one friction washer (58) which engages said sealing plate (50) while being pressed onto the balancing piston (53).

6. Device according to any one of claims 1 to 5, characterized in that each friction pad element (2, 3, 4) comprises a rigid base (19) on one side (19a) of which said friction pad is mounted, said base being adapted to engage, on the side of its other face, a corresponding bearing end (17, 57) of the balancing piston (15, 53) through a ball-and-socket joint (18, 17; 59, 57) which permits relative pivoting of said base (19) and said balancing piston (15, 53, 53a).

7. Device according to claim 6, characterized in that said rigid base (19) is connected with a certain clearance to the spherical end (17, 57) of the balancing piston (15, 53) by means of a tensile connection member (21, 63).

8. Device according to claim 7, characterized in that said tensile connection member (21) is constituted by a stud member (22) integral with said base (19) and engaging a blind hole (24) provided substantially at the centre of the spherical end (17) of the balancing piston (15) while being connected to the side walls of said blind hole by an elastic annular disc (25) interposed between an external annular groove (26) provided in the side wall of said blind hole (24) and an outer annular groove (27) provided at the periphery of said stud member (22).

9. Device according to any one of claims 6 to 8, characterized in that the rigid bases (19) of said friction pad elements (2, 3, 4) are each resiliently engaged by a peripheral groove (39) in an aperture (37) of a thin plate (28) which is removably fixed at a plurality of locations (29) onto one of the substantially planar faces (30) of said brake pads carrier (6) while being adapted to withstand the tangential forces transmitted by said friction elements (2, 3, 4) and to transmit said forces through said securing locations to said brake pads carrier (1).

10. Device according to claim 9, characterized in that said thin plate (28) is held at a distance from the face (30) of the brake pads carrier (5) so as to allow said bases (19) to pivot freely, by means of a sleeve (31) having a peripheral groove (32) engaged by the inner edge of a corresponding hole of said plate (28), and in that said sleeve (31) is forced into a hole (34) provided in the face (30) of said brake pads carrier, by means of a screw (35) extending through a central bore of the sleeve (31) and removably screwed into a threaded bore (36) of the brake pads carrier (6).

11. Device according to any one of claims 9 and 10, characterized in that each aperture (37) of said thin plate (28), which receives a base (19), is constituted by a bore having a diameter smaller than that of said base (19), but greater than that of the bottom of said peripheral groove (39) of the base (19), while a plurality of radial slots (38) are provided and arranged around said bore.

12. Device according to any one of claims 6 to 8, characterized in that the ball-and-socket connecting portions (59) of said rigid bases (19) are transversely interconnected by a thin flexible plate (28) adapted to transmit between said bases (19) the forces that are tangential with respect to the friction pads (20) without transmitting the normal forces, said plate (28) allowing said bases (19) to move axially, independently from each other, within the limits of a reduced stroke length, and to pivot within the limits of a small angle.

13. Device according to claim 11 or 12, characterized in that said thin plate (28) is provided with at least one positioning or indexing hole (41) adapted to receive one end of a positioning rod (42) the other end of which is introduced into a corresponding bore (43) or groove (61) of said base.

14. Device according to any one of claims 6 to 13, characterized in that said base (19) has a substantially isoceleous triangular shape centered onto the axis of said balancing piston (15), and in that said friction pad element (2, 3, 4) comprises three blocks (20) made of friction material and regularly distributed about the axis of said balancing piston at each angle of the triangle.

15. Device according to claim 13 or 14, adapted to be applied to a brake disc, characterized in that the various bases (19) and the said blocks (20) made of friction material secured onto said bases are distributed so as to engage the friction surface (5) of said disc at surfaces geometrically disposed with respect to said friction surface (5) of said disc whereby during operation a substantially equal heating will result at all locations of the friction surface (5) of said disc, with the exception of the inner and outer edges of said friction surface.

16. Device according to any one of claims 1 to 15, characterized in that the end of the balancing piston (15) which penetrates said containment chamber (7) terminates by an enlarged head (16) retained in said chamber by a guiding sleeve (13) for guiding the translational motion of the piston, said sleeve being sealingly secured by its periphery in a bore (12) provided between said containment chamber (7) and the face (30) of the brake pads carrier (6) which is located on the side of said friction elements (2, 3, 4).

17. Device according to claim 1, characterized in that the containment chamber (7) comprises closing means at the level (14) of passage of each balancing piston (15).

**Patentansprüche**

1. Vorrichtung (1) zum Halten einer Mehrzahl von Reibungsbelägeelementen (2, 3, 4), die gleichzeitig an einen gemeinsamen Reibungsweg (5), insbesondere an eine Bremsscheiben-Reibungsflächenseite (5) vermittels der an einen Bremsbelägeträger ausgeübten Bremsdruckkraft andrückbar sind, dadurch gekennzeichnet, dass jedes Reibungselement (2, 3, 4) vom freien Ende (17, 57) eines Ausgleichkolbens (15, 53) gehalten wird, der in einer Führungs- und Dichtungsbohrung (14, 51) eines Körpers. (6, 46) des Bremsbelägeträgers beweglich ist, wobei das andere Bohrungsende (16, 55) in eine im Inneren des Bremsbelägeträgers angeordnete, geschlossene und mit einem seinen inneren Druck auf alle Ausgleichkolben (15, 53) der verschiedenen Reibungsbelägeelemente (2, 3, 4) übertragenden hydrostatischen bzw. annähernd hydrostatischen Medium (49) gefüllte Druckkammer (7), einmündet.

2. Vorrichtung nach Anspruch 1, dadurch gekennzeichnet, dass die Druckkammer (7) mit einem quasi festen Elastomerblock (49) gefüllt ist, auf dem sich das andere Ende (55) der Ausgleichkolben (53) unmittelbar oder unter Zwischenschaltung eines Übertragungskolbens (53a) abstützt.

3. Vorrichtung nach Anspruch 2, dadurch gekennzeichnet, dass die Druckkammer durch eine Nute (45) gebildet ist, die in eine Platte bzw. in einen Körper (46) beispielsweise eingefräst ist und alle den Ausgleichkolben (53) gegenüberliegenden Stellen der Platte miteinander verbindet, wobei die Nute (45) durch eine Verschlussplatte (50) abgedeckt ist, welche auf der vorgenannten Platte (bzw. Körper) (46) festgestellt ist.

4. Vorrichtung nach Anspruch 3, dadurch gekennzeichnet, dass sich die Nute (45) im Körpers (46) des Bremsbelägeträgers erstreckt und vermittels einer von den Ausgleichkolben (53) durchqueren und mit Ausgleichkolbenhaltemitteln (58, 52) versehenen Abschlussplatte (50) verschlossen ist.

5. Vorrichtung nach Anspruch 4, dadurch gekennzeichnet, dass das Haltemittel eines jeden Ausgleichkolbens (53) eine Schulterung (52) der vom Ausgleichkolben (53) durchquerten Abschlussplatte (50), sowie einen sich auf der Abschlussplatte (50) abstützenden und auf dem Ausgleichkolben (53) fest aufsitzenden Reibungsring (58) umfassen.

6. Vorrichtung nach einem der Ansprüche 1 bis 5, dadurch gekennzeichnet, dass jedes Reibungsbelägeelement (2, 3, 4) ein starres Basiselement (19) besitzt, wobei auf einer Seite (19a) des letzteren der Reibungsbelag angeordnet ist und seitens seiner anderen Seite vermittels eines zugehörigen Abstützendes (17, 57) des Ausgleichkolbens (15, 53) mit Hilfe eines Kugelgelenks (18, 17; 59, 57) abstützbar wird, das eine Schwenkbewegung zwischen dem Basiselement (19) und dem Ausgleichkolben (15, 53, 53a) gestattet.

7. Vorrichtung nach Anspruch 6, dadurch gekennzeichnet, dass das starres Basiselement (19) mit Bewegungsfreiheit mit dem kugelförmigen Ende (17, 57) des Ausgleichkolbens (15, 53) unter Zwischenschaltung eines auf Zug beaufschlagten Verbindungselementes (21, 63) verbunden ist.

8. Vorrichtung nach Anspruch 7, dadurch gekennzeichnet, dass das auf Zug beaufschlagte Verbindungselement (21) einen mit dem Basiselement (19) fest verbundenen Ansatz (22) umfasst, der in eine wesentlich mittig des kugelförmigen Ende (17) des Ausgleichkolbens (15) angeordnete Blindbohrung (24) hineinragt und mit den Seitenwandungen der Blindbohrung durch eine elastische Ringscheibe (25) verdunden ist, welche zwischen einer in der Seitenwandung der Blindbohrung (24) vorgesehenen äusseren Ringnute (26) und einer am Umfang des Ansatzes (22) vorgesehenen inneren Ringnute (27) angeordnet ist.

9. Vorrichtung nach einem der Ansprüche 6 bis 8, dadurch gekennzeichnet, dass die starren Basiselemente (19) der Reibungsbelägeelemente (2, 3, 4) elastisch durch eine Umfangsausnute (39) in eine Öffnung (37) einer dünnen Platte (28) eingreifen, die lösbar in mehreren Bereichen (29) an einer der wesentlich ebenen Seiten (30) des Bremsbelägeträgers (6) befestigt ist und die von den Reibungselementen (2, 3, 4) herrührenden Tangentialkräfte aufnehmen kann, und sie über die Befestigungsbereiche an den Bremsbelägeträger (1) übertragen kann.

10. Vorrichtung nach Anspruch 9, dadurch gekennzeichnet, dass die dünne Platte (28) in Abstand von der Seite (30) des Bremsbelägeträgers (6) gehalten wird, um eine freie Schwenkbegenung der Basiselemente (19) zu gestatten, wozu ein Rohrstück (31) mit einer Umfangsnute (32) vorgesehen ist, in welche der Innenrand einer entsprechenden Bohrung (33) der Platte (28) eingreift, und dass das Rohrstück (31) in eine Bohrung (34) der Seite (30) des Bremsbelägeträgers vermittels einer Schraube (35) eingedrückt ist, die eine mittige Bohrung des Rohrstücks (31) durchquert und lösbar in eine Gewindebohrung (36) des Bremsbelägeträgers (6) eingeschraubt ist.

11. Vorrichtung nach Anspruch 9 oder 10, dadurch gekennzeichnet, dass jede Öffnung (37) der dünnen Platte (28), die ein Basiselement (19) aufnimmt, durch eine Bohrung gebildet ist, deren Durchmesser kleiner ist, als derjenige des Basiselements (19), jedoch grösser als der Durchmesser des Bodens der Umfangsausnute (39) des Basiselements (19), wobei mehrere Radialschlitze (38) um diese Bohrung herum angeordnet sind.

12. Vorrichtung nach einem der Ansprüche 6 bis 8, dadurch gekennzeichnet, dass die Teile (59) der Kugelgelenkverbindung der starren Basiselemente (19) miteinander in Querrichtung durch eine dünne, biegsame Platte (28) verbunden sind, die zwischen den Basiselementen (19) die Tangentialkräfte auf die Reibungsbeläge (20) überträgt, ohne jedoch die normalen Kräfte zu übertragen, wobei die biegsame Platte die Basiselemente (19) unabhängig von einander axial über eine geringe Hublänge frei beweglich lässt, und um einen beschränkten Winkel frei schwenkbar lässt.

13. Vorrichtung nach Anspruch 11 oder 12, dadurch gekennzeichnet, dass die dünne Platte (28) wenigstens ein Positionierungsloch (41) aufweist, das eines der Ende eines Positionierungsstiftes (42) aufnimmt, dessen anderes Ende in eine entsprechende Bohrung (43) bzw.Nute (61) des Basiselements eingreift.

14. Vorrichtung nach einem der Ansprüche 6 bis 13, dadurch gekennzeichnet, dass das Basiselement (19) die Form eines wesentlich gleichseitigen Dreiecks besitzt, das in bezug auf die Achse des Ausgleichkolbens (15) zentriert ist, und dass das Reibungsbelägeelement (2, 3, 4) drei an jeder Ecke des Dreiecks gleichmässig um die Achse des Ausgleichkolbens herum verteilte Blöcke (20) aus Reibungsmaterial umfasst.

15. Vorrichtung nach Anspruch 13 oder 14, mit einer Bremsscheibe zusammenwirkt, dadurch gekennzeichnet, dass die verschiedenen Basiselemente (19) und die an denselben befestigten Reibungsmaterialblöcke (20) derart verteilt sind, dass sie mit der Reibungsoberfläche (5) der Scheibe in Berührung kommen, wobei die Berührungsflächen geometrisch in bezug auf die Reibungsfläche (5) der Scheibe so angeordnet sind, dass während des Betriebs die Erhitzung an allen Stellen der Reibungsfläche (5) der Scheibe wesentlich gleich ist, mit Ausnahme des inneren Randes und des äusseren Randes der Reibungsfläche.

16. Vorrichtung nach einem der Ansprüche 1 bis 15, dadurch gekennzeichnet, dass das in die Kammer (7) eindringende Ende des Ausgleichkolbens (15) einen erweiterten Kopf (16) aufweist, der in der Kammer (7) durch eine den Kolben geradlinig führende Hülse (13) zurückgehalten wird, welches mit seinem Umfang dicht in eine zwischen der Kammer (7) und der den Reibungselementen (2, 3, 4) benachbarten Seite (30) des Bremsbelägeträgers (6) gelegene Bohrung (12) eingelassen ist.

17. Vorrichtung nach Anspruch 1, dadurch gekennzeichnet, dass die Kammer (7) Dichtungsmittel im Bereich des Durchgangs (14) eines jeden Ausgleichkolbens (15) aufweist.

FIG.1

FIG.3

FIG.2

**FIG.4**

**FIG.5**